# EUROPÄISCHE PATENTSCHRIFT

(11) **EP 3 047 157 B1**
(45) Veröffentlichungstag und Bekanntmachung des Hinweises auf die Patenterteilung: **01.11.2017**
(21) Anmeldenummer: 14761621.3
(22) Anmeldetag: 05.09.2014
(51) Int. Cl.: F16B 5/02, F16B 37/12

(54) **ANORDNUNG ZUR VERBINDUNG VON BAUTEILEN**
ARRANGEMENT FOR CONNECTING COMPONENTS
DISPOSITIF POUR RELIER DES PIÈCES

(30) Priorität: 18.09.2013 DE 202013104266 U
(43) Veröffentlichungstag der Anmeldung: 27.07.2016
(73) Patentinhaber: Schwarzbich, Jörg, 33615 Bielefeld (DE)
(72) Erfinder: Schwarzbich, Jörg, 33615 Bielefeld (DE)
(74) Vertreter: Ter Meer Steinmeister & Partner
(86) Internationale Anmeldenummer: PCT/EP2014/069005
(87) Internationale Veröffentlichungsnummer: WO 2015/039899

(56) Entgegenhaltungen:
- EP-A1- 0 373 049
- EP-A1- 0 957 272
- DE-A1- 3 524 309
- DE-A1-102012 110 352
- US-A- 3 121 453

## Beschreibung

Die Erfindung betrifft eine Anordnung zur Verbindung eines ersten, eine Gewindebohrung aufweisenden Bauteils mit einem zweiten Bauteil mittels einer Schraube und einer diese umgebenden Schraubenfeder, die das zweite Bauteil durchsetzt und mit einer Gewindestruktur dieses Bauteils in Eingriff steht, so dass ihr zwischen den beiden Bauteilen liegender Abschnitt einen Abstandshalter mit einstellbarem Axialmaß bildet.

Mit Hilfe solcher Anordnungen ist es möglich, zwei in Abstand zueinander liegende Bauteile fest miteinander zu verbinden, indem sie unter Zwischenfügung des Abstandshalters miteinander verspannt werden. Der Abstandshalter erlaubt es dabei, Toleranzen im Abstandsmaß zwischen den beiden Bauteilen auszugleichen.

Wenn zwischen der Schraube und der Schraubenfeder ein geeigneter Reibschluss besteht, lässt sich erreichen, dass sich die Schraubenfeder beim Einschrauben der Schraube mitdreht, so dass sich ihre axiale Position relativ zu der Gewindestruktur ändert bis das Ende der Schraubenfeder an dem ersten Bauteil anstößt und so der Toleranzausgleich automatisch herbeigeführt wird. Beim weiteren Eindrehen der Schraube in die Gewindebohrung des ersten Bauteils lässt der Reibschluss ein Durchrutschen der Schraube in der Schraubenfeder zu, so dass die Schraubenfeder ihre Position behält.

Aus US 7 441 980 B2 ist eine Anordnung dieser Art bekannt, bei der die Gewindestruktur an dem zweiten Bauteil durch einen ringförmigen, an einer Stelle unterbrochenen und in Form einer Schraubenwindung verlaufenden Flansch gebildet wird, der zwischen die Windungen der Schraubenfeder greift. Wenn das zweite Bauteil ein Blech ist, kann die Gewindestruktur unmittelbar in den Rand eines Loches eingeprägt werden, durch das die Schraube hindurchgesteckt wird.

Bei der Montage einer solchen Anordnung kann entweder zuerst die Schraubenfeder mit der Gewindestruktur in Eingriff gebracht und dann die Schraube eingesteckt werden, oder die Schraubenfeder sitzt bereits auf der Schraube und wird dann in die Gewindestruktur eingeschraubt, während die Schraube in die Gewindebohrung des ersten Bauteils eingeschraubt wird. Im ersteren Fall erweist es sich oft als schwierig, die Schraube in die gegenüber dem Blech vorstehende Schraubenfeder einzuführen. Das gilt besonders in beengten Einbausituationen und/oder in Situationen, in denen die Sicht auf die Verbindungsstelle eingeschränkt ist. Im zweiten Fall erweist es sich oft als schwierig, die Schraubenfeder und die Gewindestruktur so zu gestalten, dass das Ende der Schraubenfeder beim Eindrehen der Schraube quasi automatisch an der Gewindestruktur einschnäbelt. Bei der bekannten Anordnung soll dieses Einschnäbeln dadurch erleichtert werden, dass das Ende des Drahtes, der die letzte Windung der Schraubenfeder bildet, etwas von der Schraubenfeder weg gebogen wird. Diese Gestaltung der Schraubenfeder ist jedoch herstellungstechnisch aufwendig, insbesondere dann, wenn die Schraubenfeder aus Festigkeitsgründen aus einem harten Federstahl besteht.
Aus DE 10 2012 110 352 ist eine Verbindungsanordnung bekannt, bei der der Abstandshalter durch eine Schraubenfeder und ein Bauteil gebildet wird, das mit der Schraubenfeder in Gewindeeingriff steht. Dieser Abstandshalter wird dann zwischen den zu verbindenden Bauteilen verspannt.
Aufgabe der Erfindung ist es, eine Anordnung der eingangs genannten Art zu schaffen, die sich einfacher montieren lässt.
Diese Aufgabe wird erfindungsgemäß gelöst, dass das zweite Bauteil einen topfförmigen Einzug aufweist, der einen Abschnitt der Schraubenfeder aufnimmt und an dessen Boden die Gewindestruktur gebildet ist.

Der topfförmige Einzug erleichtert es bei beiden oben beschriebenen Varianten des Montagevorgangs, das Ende der Schraubenfeder und der Schraube auf die Gewindestruktur zu zentrieren. Außerdem gibt dieser Einzug der Schraubenfeder Führung, während sie in die Gewindestruktur eingeschraubt wird. Insbesondere lässt sich so verhindern, dass die Feder ausknickt oder dass die letzte Windung am Ende der Schraubenfeder radial aufgebogen wird, wenn sie beim Einschnäbeln in die Gewindestruktur auf Widerstand trifft.

Wenn die Schraubenfeder bei dem Montagevorgang bereits auf dem Gewindeschaft der Schraube sitzt, so kann das zugehörige Schraubenloch in dem zweiten Bauteil (Blech) einfach dadurch gefunden werden, dass man das Ende der Schraube über die Oberfläche des Bleches bewegt, bis es in den topfförmigen Einzug einfällt. Wenn die Schraubenfeder zunächst ohne die Schraube mit der Gewindestruktur in Eingriff gebracht wird, gilt dasselbe beim Ausrichten der Schraubenfeder auf die Gewindestruktur. Gegebenenfalls lässt sich die Schraubenfeder dann auch so weit eindrehen, dass ihr rückwärtiges Ende ganz in dem Einzug liegt und nicht mehr über die Oberfläche des Bleches übersteht, so dass auch das Auffinden der richtigen Position für die Schraube erleichtert wird.

Ein weiterer wesentlicher Vorteil der Erfindung besteht darin, dass im Endzustand zumindest ein Teil der Schraubenfeder in dem topfförmigen Einzug aufgenommen ist, so dass die Schraubenfeder und die Schraube weniger weit (oder gar nicht) über die Oberfläche des Bleches überstehen.

Vorteilhafte Ausgestaltungen der Erfindung sind in den Unteransprüchen angegeben.

In einer Ausführungsform ist die Gewindestruktur in einem Stück an dem zweiten Bauteil ausgebildet.

In einer anderen Ausführungsform wird die Gewindestruktur durch ein separates, scheibenförmiges Bauteil gebildet, das so in den topfförmigen Einzug eingesetzt wird, dass es den Boden dieses Einzugs bildet. Wahlweise kann diese Scheibe dann mit dem zweiten Bauteil verklebt oder verschweißt werden.

Da sich die Scheibe jedoch einerseits an dem Teil des zweiten Bauteils abstützt, das den Rand des Schraubenloches bildet, und sich andererseits auch an den auf Block liegenden Windungen der Schraubenfeder abstützen kann, genügt es in vielen Fällen, wenn die Scheibe lediglich gegen Verdrehen in dem topfförmigen Einzug gesichert wird. Das lässt sich beispielsweise dadurch erreichen, dass der Einzug einen nicht-kreisförmigen Innenquerschnitt und die Scheibe einen dazu komplementären Umriss hat.

Eine weitere vorteilhafte Möglichkeit besteht darin, die Scheibe in einer entsprechenden Öffnung des zweiten Bauteils zu verclipsen.

Generell hat die Verwendung einer getrennt von dem zweiten Bauteil hergestellten Gewindestruktur den Vorteil, dass die Dicke des schraubenförmigen Flansches der Gewindestruktur unabhängig von der Blechdicke des zweiten Bauteils gewählt werden kann. Dadurch wird insbesondere bei verhältnismäßig dicken Blechen das Einschrauben der Schraubenfeder in die Gewindestruktur erleichtert oder überhaupt erst ermöglicht. Die Lösung mit einer separaten, eingeclipsten Gewindestruktur ist deshalb auch dann von Vorteil, wenn das zweite Bauteil keinen topfförmigen Einzug aufweist.

Im folgenden werden Ausführungsbeispiele anhand der Zeichnung näher erläutert.

Es zeigen:
- Fig. 1: eine Explosionsdarstellung einer Verbindungsanordnung gemäß einem ersten Ausführungsbeispiel;
- Fig. 2 bis 4: axiale Schnitte der Verbindungsanordnung nach Fig. 1 in unterschiedlichen Positionen;
- Fig. 5 und 6: axiale Schnitte einer Verbindungsanordnung gemäß einem anderen Ausführungsbeispiel;
- Fig. 7: eine Explosionsdarstellung einer Verbindungsanordnung gemäß einem weiteren Ausführungsbeispiel;
- Fig. 8: einen Grundriss einer Scheibe, die eine Gewindestruktur bildet;
- Fig. 9: einen Schnitt längs der Linie IX-IX in Fig. 8;
- Fig. 10: einen axialen Schnitt durch die Verbindungsanordnung nach Fig. 7;
- Fig. 11: eine Verbindungsanordnung gemäß einem weiteren Ausführungsbeispiel in der Draufsicht, und
- Fig. 12: einen axialen Schnitt durch Teile einer Verbindungsanordnung gemäß einem weiteren Ausführungsbeispiel

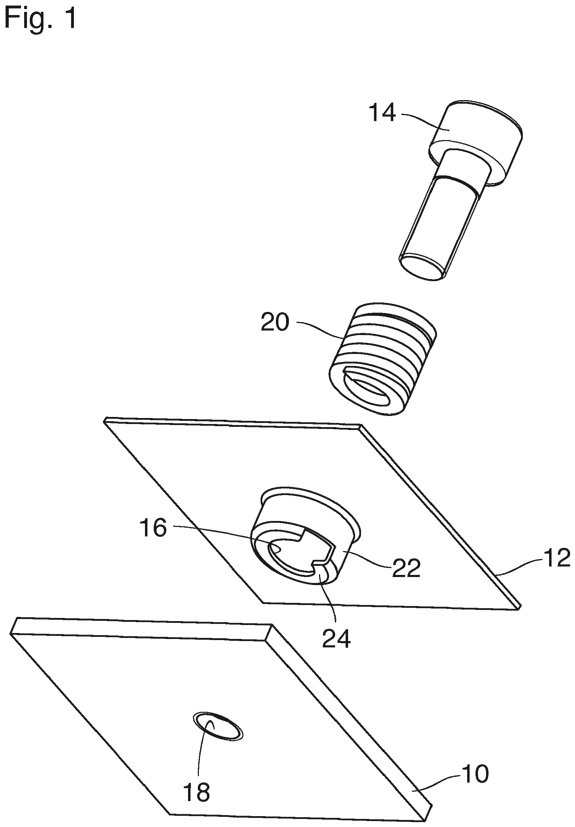

In Fig. 1 ist eine Verbindungsanordnung gezeigt, die dazu dient, ein erstes Bauteil 10 in Abstand mit einem tafelförmigen zweiten Bauteil 12, beispielsweise einem Blech, zu verbinden. Dazu ist eine Schraube 14 vorgesehen, die durch ein Schraubenloch 16 des Bauteils 12 gesteckt und in eine Gewindebohrung 18 des Bauteils 10 eingeschraubt wird. Als Abstandshalter zwischen den Bauteilen 10 und 12 dient eine Schraubenfeder 20, die den Gewindeschaft der Schraube 14 umgibt. Die Schraubenfeder 20 ist beispielsweise aus einem Federstahldraht mit rechteckigem Querschnitt gewickelt.

Das Schraubenloch 16 des zweiten Bauteils 12 befindet sich am Boden eines topfförmigen Einzugs 22, der in das Blech des Bauteils 12 eingetieft ist. Der Boden des Einzugs 22 bildet am Umfang des Schraubenloches 16 eine Gewindestruktur 24 in der Form eines an einer Stelle unterbrochenen schraubenförmigen Flansches, der eine einzelne Schraubenwindung bildet. Der Einzug 22, das Schraubenloch 16 und die Gewindestruktur 24 können in einem oder mehreren Schritten aus dem Blech des Bauteils 12 gestanzt und geprägt werden.

Im gezeigten Beispiel ist die Schraubenfeder 20 an beiden Enden, zumindest jedoch an dem Ende, das der Gewindestruktur 24 zugewandt ist, so abgefräst, dass ihre Stirnflächen nicht der Gewindesteigung folgen, sondern rechtwinklig zur Achse der Schraubenfeder verlaufen. Das hat zugleich zur Folge, dass der die letzte Windung der Schraubenfeder bildende Draht zum freien Ende hin keilförmig ausläuft.

Um die Verbindung zwischen den Bauteilen 10 und 12 herzustellen, wird die Schraubenfeder 20 in den Einzug 22 eingeführt, der die Schraubenfeder mit geringem Spiel (oder ggf. auch spielfrei) umgibt und ihr somit Führung gibt. Wenn die rechtshändig gewickelte Schraubenfeder 20 in Einschraubrichtung rechts herum gedreht wird, schnäbelt das keilförmig verjüngte Ende der letzten Windung an der Unterbrechungsstelle der Gewindestruktur 24 ein, so dass der Flansch dieser Gewindestruktur zwischen die Schraubenwindungen greift. Dieser Vorgang wird dadurch erleichtert, dass die Schraubenfeder in dem Einzug 22 stabil geführt wird und zudem das Ende der letzten Windung (und ggf. auch das Ende des Flansche der Gewindestruktur) verjüngt ist.

Wenn die Schraubenfeder 20 mit der Gewindestruktur 24 in Eingriff steht, wird die Schraube 14 mit ihrem Gewindeschaft durch das Innere der Schraubenfeder 20 gesteckt. Vorzugsweise besteht zwischen dem Gewindeschaft der Schraube 14 und der Innenfläche der Schraubenfeder 20 ein gewisser Reibschluss. Wenn dann die Schraube 14 in die Gewindebohrung 18 eingeschraubt wird, so wird folglich die Schraubenfeder 20 in Drehrichtung mitgenommen und somit weiter durch die Gewindestruktur 24 hindurchgeschraubt. Auf diese Weise verlängert sich der zwischen dem Boden des Einzugs 22 und dem Bauteil 10 gelegene Abschnitt der Schraubenfeder 20 auf Kosten des Abschnitts, der in dem Einzug 22 aufgenommen ist und zumindest am Anfang noch aus diesem Einzug herausragt.

Wenn schließlich das Ende der Schraubenfeder 20 an dem Bauteil 10 anstößt, wird der zwischen dem Bauteil 10 und der Gewindestruktur 24 liegende Abschnitt der Schraubenfeder axial komprimiert, so dass seine Windungen auf Block liegen. Die Schraubenfeder kann dann, sofern das Bauteil 12 festgehalten wird, nicht weiter durch die Gewindestruktur 24 durchgeschraubt und folglich auch nicht weiter gedreht werden, so dass sich die Schraube 14 allein weiterdreht. Wenn sich schließlich der Kopf der Schraube 14 gegen das andere Ende der Schraubenfeder 20 legt, wird auch der zwischen diesem Kopf und der Gewindestruktur 24 liegende Abschnitt der Schraubenfeder 20 auf Block komprimiert, so dass er auf die Gewindestruktur 24 drückt. Auf diese Weise werden die als Abstandshalter dienende Schraubenfeder 20 und die beiden Bauteile 10 und 12 fest miteinander verspannt.

Wenn die beiden Bauteile 10 und 12 bereits an anderer Stelle miteinander verbunden sind, so dass sie von Anfang an einen gewissen Abstand zueinander haben, so passt sich die Schraubenfeder 20 automatisch an dieses Abstandmaß an. Wenn dagegen das Bauteil 12 relativ zu dem Bauteil 10 beweglich und lediglich gegen Verdrehung gesichert ist, führt der Gewindeeingriff zwischen der Schraubenfeder 20 und der Gewindestruktur 24 dazu, dass sich der Abstand zwischen den Bauteilen 10 und 12 vergrößert und das tafelförmige Bauteil 12 dem Kopf der Schraube 14 so lange entgegenkommt, wie sich die Schraubenfeder 20 dreht. Das Ausmaß dieser Relativbewegung zwischen den Bauteilen 10 und 12 lässt sich dadurch steuern, dass die Schraubenfeder 20 in einem vorbereitenden Schritt mehr oder weniger tief in die Gewindestruktur 24 eingedreht wird.

Andererseits ist es auch möglich, dass im Anfangszustand die Schraubenfeder 20 von dem Bauteil 12 getrennt ist und reibschlüssig auf dem Gewindeschaft der Schraube 14 sitzt (und am Kopf dieser Schraube anliegt). Die Schraube 14 und die Schraubenfeder 20 werden dann gemeinsam in den Einzug 22 eingeführt, und durch Drehung wird einerseits der Gewindeeingriff zwischen der Gewindestruktur 24 und der Schraubenfeder 20 und andererseits der Gewindeeingriff zwischen der Schraube 14 und der Gewindebohrung 18 hergestellt. Die Gewindestruktur 24 mit ihrem schraubenförmig verlaufenden unterbrochenen Flansch erlaubt es dabei, dass im Anfangszustand der Boden des Einzugs 22 unmittelbar an dem Bauteil 10 anliegt und sich erst im Laufe der Drehung der Schraubenfeder 20 von dem Bauteil 10 entfernt.

Der Reibschluss zwischen der Schraube 14 und der Schraubenfeder 20 kann auf unterschiedliche Weise hergestellt werden, beispielsweise dadurch, dass der Innenquerschnitt der Schraubenfeder ein gewisses Untermaß hat, so dass die Schraubenfeder sich beim Einstecken des Gewindeschaftes der Schraube 14 elastisch aufweitet. Ebenso ist es denkbar, auf dem Gewindeschaft der Schraube 14 eine Kunststoffhülse anzuordnen, die für den Reibschluss mit der Schraubenfeder sorgt. Wahlweise kann auch ein an einer Stelle seines Umfangs unterbrochener Federring vorgesehen sind, der an der Innenfläche der Schraubenfeder anliegt und sich mit nach innen gebogenen Federelementen elastisch auf dem Umfang des Gewindeschaftes abstützt, wie in ähnlicher Form auch in DE 10 2012 110 352 A1 gezeigt ist.

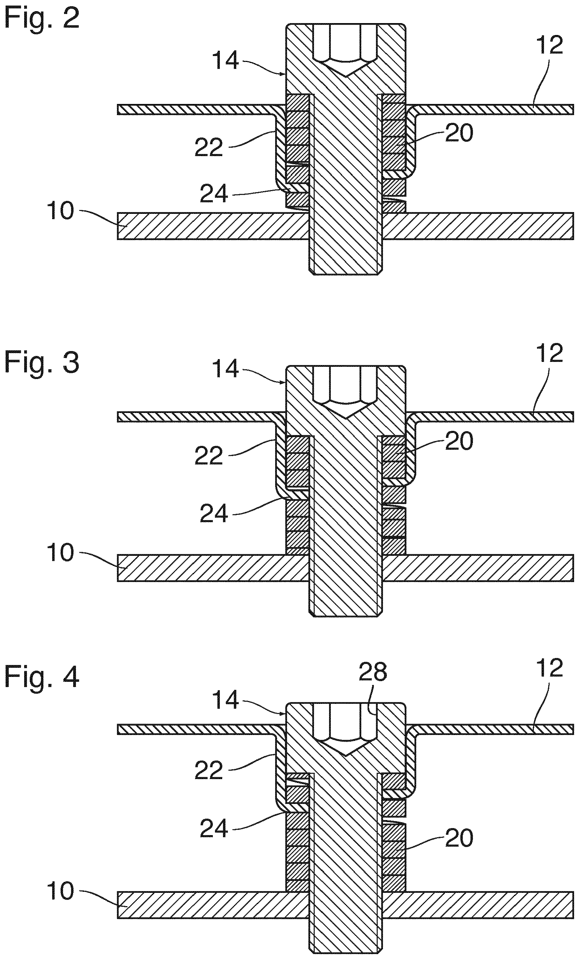

Fig. 2 zeigt die Verbindungsanordnung in einem Zustand, in dem die Bauteile 10 und 12 einen relativ geringen Abstand zueinander haben, so dass zwischen der Gewindestruktur 24 am Boden des Einzugs 22 und dem Bauteil 10 nur eine oder zwei Windungen der Schraubenfeder 20 liegen.

Die Schraube 14 hat in diesem Beispiel einen zylindrischen Kopf, dessen Durchmesser mit dem Außendurchmesser der Schraubenfeder 20 und dem Innendurchmesser des gleichfalls zylindrischen Einzugs 22 übereinstimmt. Wenn zwischen den Bauteilen 10 und 12 ein größerer Abstand eingestellt werden soll, wie in Fig. 3 und 4 gezeigt ist, kann deshalb der Kopf der Schraube 14 auch in den Einzug 22 eintauchen. Fig. 4 zeigt einen Zustand, in dem der Kopf der Schraube fast vollständig in dem Einzug 22 verschwunden ist. Da als Drehhandhabe im Kopf der Schraube 14 ein Innensechskant 28 vorgesehen ist, könnte die Schraube selbst dann noch angezogen werden, wenn ihr Kopf vollständig in dem Einzug 22 aufgenommen wäre und folglich nicht mehr über die obere Oberfläche des Bauteils 12 überstehen würde.

Die unterschiedlichen Konfigurationen, die in Fig. 2 bis 4 gezeigt sind, können beispielsweise dadurch hergestellt werden, dass die Schraube 14 zunächst nur so weit in die Schraubenfeder 20 eingesteckt wird, dass sie noch nicht in die Gewindebohrung des Bauteils 10 eingreift. Wenn dann die Schraube zusammen mit der Schraubenfeder 20 gedreht wird, während das Bauteil 12 am Mitdrehen gehindert wird, schraubt sich die Gewindestruktur 24 durch die Schraubenfeder hindurch, und der Abstand zwischen den Bauteilen 10 und 12 nimmt zu. Anschließend wird die Schraube 14 tiefer eingesteckt, bis sie in der Gewindebohrung des Bauteils 10 fasst. Bei der weiteren Einschraubbewegung, bis die Schraube 14 fest angezogen ist, führt die Schraube eine feste Anzahl von Umdrehungen aus, bis der Kopf der Schraube sich auf der auf Block komprimierten Schraubenfeder abstützt. Da auch die Schraubenfeder 20 die gleiche Anzahl von Umdrehungen ausführt, ändert sich das Axialmaß zwischen den Bauteilen 10 und 12 bei diesem Vorgang um einen im voraus bekannten Betrag.

Die Schraubenfeder 20 kann so gewickelt sein, dass ihre Windungen schon im unbelasteten Zustand auf Block liegen. Wahlweise kann sie jedoch auch so gewickelt sein, dass ihre Windungen im unbelasteten Abstand einen gewissen Abstand zueinander haben, was das Einschnäbeln der Schraubenfeder in der Gewindestruktur 24 weiter erleichtert. Auf Block kommen die Windungen der Schraubenfeder 20 dann erst im weiteren Verlauf der Einschraubbewegung, wenn die Windungen einerseits zwischen dem Bauteil 10 und der Gewindestruktur 20 und andererseits zwischen der Gewindestruktur 24 und dem Kopf der Schraube 14 komprimiert werden.

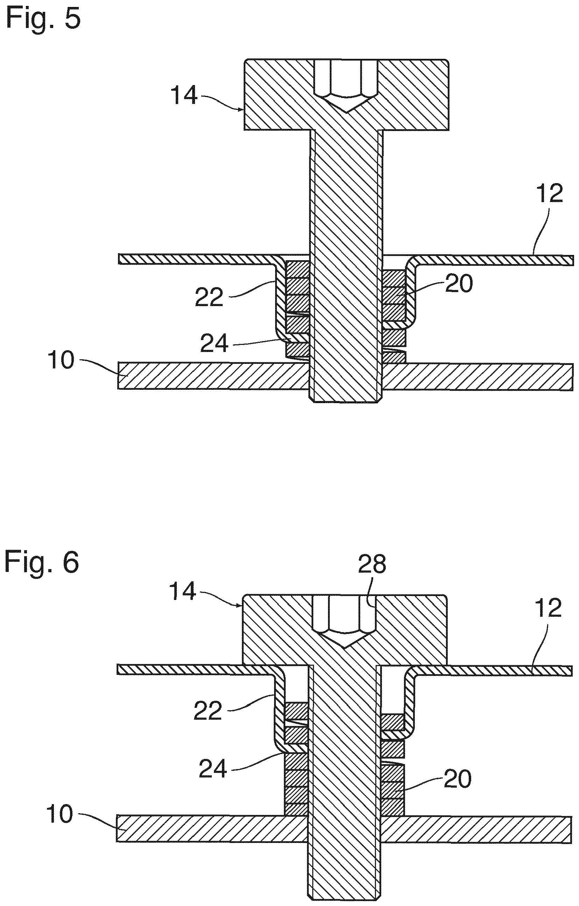

In einer anderen Ausführungsform ist es auch möglich, dass der Kopf der Schraube 14 einen größeren Durchmesser hat als der Einzug 20. Ein Beispiel ist in Fig. 5 und 6 gezeigt. Der Kopf der Schraube kann dann nicht in den Einzug eintauchen sondern wird sich, wenn die Schraube fest angezogen ist, auf der oberen Oberfläche des Bauteils 12 abstützen. Abhängig vom Abstandsmaß zwischen den Bauteilen 10 und 12 wird dann das obere Ende der Schraubenfeder 20 im Endzustand einen mehr oder weniger großen Abstand zum Kopf der Schraube haben. Der untere, als Abstandshalter wirkende Abschnitt der Schraubenfeder wird dagegen auch in diesem Fall zwischen der Gewindestruktur 24 und dem Bauteil 10 auf Druck beansprucht. Ein Vorteil dieser Lösung besteht darin, dass die Schraubenfeder 20 am oberen Ende nicht plangeschliffen zu werden braucht.

Die zuletzt beschriebene Variante hat außerdem den Vorteil, dass der Überstand des Kopfes der Schraube 14 über die Oberfläche des Bauteils 10 stets der gleiche ist, unabhängig vom Abstandsmaß zwischen den Bauteilen.

Im Anlieferzustand kann die Schraubenfeder 20 bereits auf den Gewindeschaft der Schraube 14 aufgesteckt sein. Wahlweise kann die Schraubenfeder im Anlieferzustand auch schon mit der Gewindestruktur 24 in Eingriff stehen und eine bestimmte axiale Position einnehmen, die dann das beim Fertigstellen der Verbindung endgültig erreichte Abstandsmaß bestimmt. Schließlich ist es auch möglich, dass im Anlieferzustand die Schraubenfeder 20 bereits mit der Gewindestruktur 24 in Eingriff steht und die reibschlüssig gehaltene Schraube bereits eingesteckt ist, so dass man, um die Verbindung herzustellen, lediglich noch die Schraube 14 mit der Gewindebohrung 18 im Bauteil 10 ausrichten und die Schraube anziehen muss.

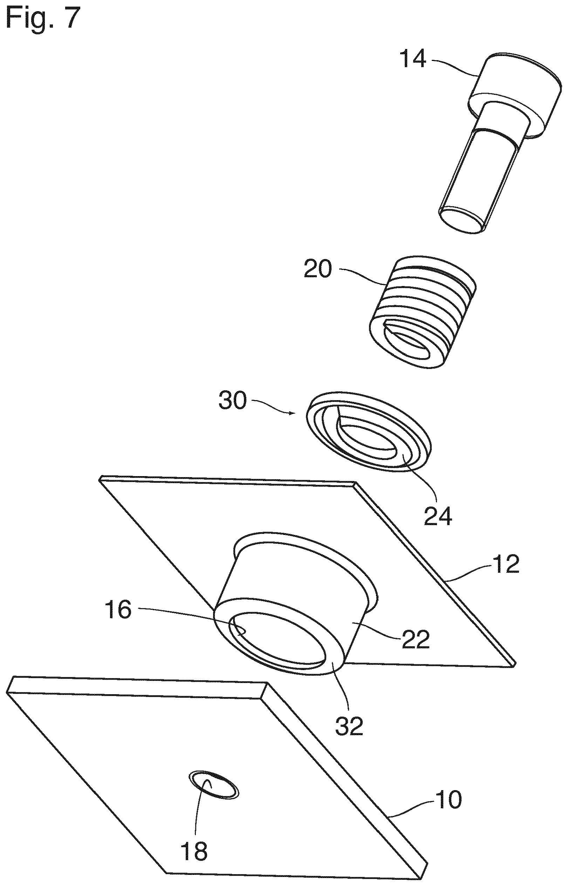

Fig. 7 zeigt eine Verbindungsanordnung gemäß einem abgewandelten Ausführungsbeispiel, das sich von den zuvor beschriebenen Ausführungsbeispielen dadurch unterscheidet, dass die Gewindestruktur 24 nicht in einem Stück im Boden des Einzugs 22 des Bauteils 12 ausgebildet ist, sondern vielmehr an einer separaten Scheibe 30 gebildet ist, die beispielsweise durch Stanzen oder Prägen hergestellt werden und dann in den Einzug 22 eingelegt werden kann. Der Einzug 22 weist in diesem Fall an seinem Boden einen nach innen umgebördelten Rand 32 auf, auf dem sich die Scheibe 30 abstützt.

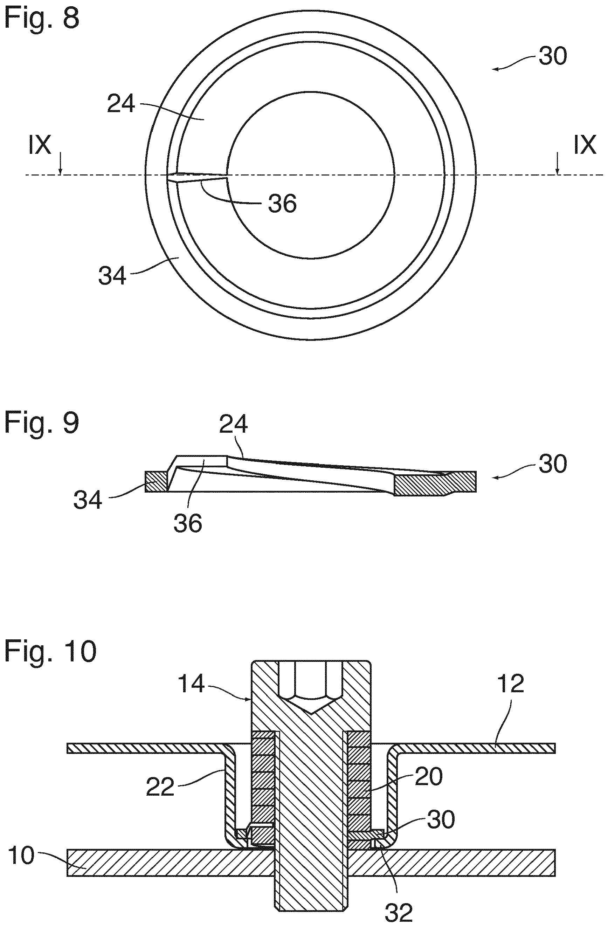

Die Scheibe 30 ist in Fig. 8 im Grundriss und in Fig. 9 im Schnitt dargestellt. Sie weist am äußeren Umfang einen flachen Ring 34 mit konstanter Dicke auf, an dem sich nach innen der schraubenförmig verlaufende Flansch anschließt, der die Gewindestruktur 24 bildet. Die Höhe der Gewindestruktur 24 nimmt in Umfangsrichtung (im Uhrzeigersinn in Fig. 8) stetig ab und steigt dann an einer Unterbrechungsstelle 36 sprunghaft wieder auf das ursprüngliche Maß.

In Fig. 10 sieht man, wie die Scheibe 30 mit ihrem Ring 34 auf dem Rand 32 am Boden des Einzugs 22 aufliegt. Die Umfangswand des Einzugs 22 umgibt in diesem Fall die Schraubenfeder 20 mit etwas größerem radialen Spiel.

Die Scheibe 30 kann mit dem Einzug 22 fest verbunden sein, beispielsweise durch Schweißung oder Klebung. Da jedoch gemäß Fig. 10 das Bauteil 12 mit dem Rand 32 seines Einzugs unter die Scheibe 30 greift und diese sich am unteren Ende der Schraubenfeder 20 abstützt, während das obere Ende sich am Kopf der Schraube 14 abstützt, würden die Bauteile 10 und 12 auch dann fest zusammengehalten und miteinander verspannt, wenn die Scheibe 30 lediglich lose eingelegt wäre. Allerdings sollte die Scheibe 30 gegen Verdrehung relativ zu dem Einzug 22 gesichert sein. Das lässt sich beispielsweise dadurch erreichen, dass die Scheibe mit gewisser Spannung in den topfförmigen Einzug 22 eingepresst wird.

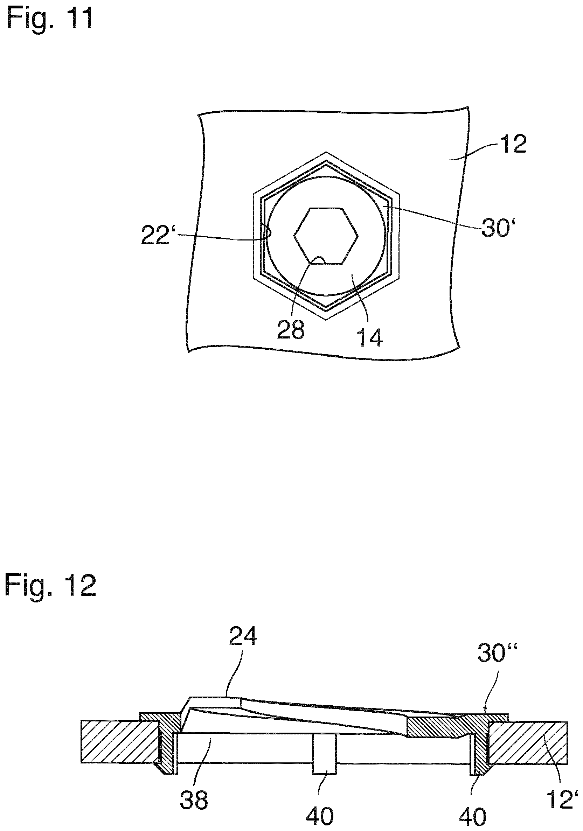

Fig. 11 zeigt eine alternative Ausführungsform, bei der das Bauteil 12 einen Einzug 22' mit nicht-kreisförmigem, beispielsweise polygonalem Innenquerschnitt hat und die Gewindestruktur an einer lose eingelegten Scheibe 30' gebildet ist, die einen zu dem Einzug 22' komplementären Außenumriss hat. Die Schraubenfeder ist in Fig. 11 durch den zylindrischen Kopf der Schraube 14 verdeckt und hat den gleichen Durchmesser wie dieser Schraubenkopf. Der Umriss der Scheibe 30' ist in diesem Beispiel ein Sechseck, dessen Seiten tangential zum äußeren Umfang der Schraubenfeder verlaufen, so dass sie der Schraubenfeder Führung geben. Die Abstützung auf dem Boden des Einzugs 22' erfolgt lediglich an den Ecken des Sechsecks.

Wahlweise können die Schraube 14, die Schraubenfeder 20 und die Scheibe 30 bzw. 30' als vormontierte Einheit angeliefert werden, so dass bei der Endmontage Kosten eingespart werden.

Fig. 12 zeigt ein Ausführungsbeispiel, bei dem die Gewindestruktur 24 an einer Scheibe 30" gebildet ist, die in eine Öffnung 38 eines tafelförmigen Bauteils 12' eingeclipst, das in diesem Fall keinen Einzug aufweist. Die Scheibe 30" kann beispielsweise aus Kunststoff bestehen und Rastklauen 40 aufweisen, die den Rand der Öffnung 38 umgreifen.

Wenn eine höhere Stabilität erforderlich ist, kann die Scheibe 30" auch aus Metall bestehen und ggf. eine Fassung aus Kunststoff aufweisen, mit der sie in der Öffnung 38 verclipst ist.

In dem in Fig. 12 gezeigten Beispiel hat das Bauteil 12' eine verhältnismäßig große Dicke. Aufgrund der getrennten Ausbildung des Bauteils 12' und der Scheibe 30" kann der Flansch, der die Gewindestruktur 24 bildet, eine wesentlich geringere Dicke aufweisen, so dass das Einschrauben der Schraubenfeder nicht erschwert wird.

## Patentansprüche

1. Anordnung mit einem ersten, eine Gewindebohrung (18) aufweisenden Bauteil (10), einem zweiten Bauteil (12; 12'), und einer Schraube (14) und einer diese umgebenden Schraubenfeder (20) zur Verbindung der beiden Bauteile, wobei die Schraubenfeder (20) das zweite Bauteil (12; 12') durchsetzt und mit einer Gewindestruktur (24) dieses Bauteils in Eingriff steht, so dass ihr zwischen den beiden Bauteilen liegender Abschnitt einen Abstandshalter mit einstellbarem Axialmaß bildet, **dadurch gekennzeichnet, dass** das zweite Bauteil (12) einen topfförmigen Einzug (22) aufweist, der einen Abschnitt der Schraubenfeder (20) aufnimmt und deren Boden die Gewindestruktur (24) bildet.

2. Anordnung nach Anspruch 1, bei der die Gewindestruktur (24) in einem Stück mit dem Einzug (22) ausgebildet ist.

3. Anordnung nach Anspruch 1 oder 2, bei der die Schraube (14) einen Kopf hat, dessen größter Außendurchmesser kleiner ist als der kleinste Innendurchmesser des Einzugs (22).

4. Anordnung nach einem der vorstehenden Ansprüche, bei der die Schraubenfeder (20) an den Innenflächen des Einzugs (22) abgestützt ist.

5. Anordnung nach einem der vorstehenden Ansprüche, bei der die Gewindestruktur (24) an einer Scheibe (30; 30') gebildet ist, die getrennt von dem zweiten Bauteil (12) her gestellt ist.

6. Anordnung nach Anspruch 5, bei der der Einzug (22') einen nicht-kreisförmigen Innenquerschnitt und die Scheibe (30') einen nicht-kreisförmigen Umriss hat.

7. Anordnung nach Anspruch 5 oder 6, bei der die Scheibe (30; 30') mit ihrem äußeren Umfangsrand auf einem nach innen vorspringenden Rand (32) des Einzugs (22; 22') aufliegt.

8. Anordnung nach einem der vorstehenden Ansprüche, bei dem sich die Schraube (14) bei fertiggestellter Verbindung mit ihrem Kopf auf einem außerhalb des Einzug (22) gelegenen Bereich des zweiten Bauteils (12) abstützt.

9. Anordnung nach dem Oberbegriff des Anspruchs 1 oder nach einem der vorstehenden Ansprüche, **dadurch gekennzeichnet, dass** die Gewindestruktur (24) an einer Scheibe (30") ausgebildet ist, die in eine Öffnung (38) des zweiten Bauteils (12') eingeclipst ist.

## Claims

1. An arrangement comprising a first component (10) having a threaded bore (18), a second component (12; 12'), and a screw (14) and a helical spring (20) surrounding it, for connecting the two components, wherein the helical spring (20) passes through the second component (12; 12') and engages with a threaded structure (24) of this component, so that its section located between the two components forms a spacer with an adjustable axial dimension, **characterized in that** the second component (12) has a pot-shaped indentation (22) which receives a section of the helical spring (20) and the bottom of which forms the threaded structure (24).

2. The arrangement according to claim 1, wherein the threaded structure (24) is formed in one piece with the indentation (22):

3. The arrangement according to claim 1 or 2, wherein the screw (14) has a head the largest outer diameter of which is smaller than the smallest internal diameter of the indentation (22).

4. The arrangement according to any of the preceding claims, wherein the helical spring (20) is supported at the internal surfaces of the indentation (22).

5. The arrangement according to any of the present claims, wherein the threaded structure (24) is formed at a disk (30; 30') which is formed separately from the second component (12).

6. The arrangement according to claim 5, wherein the indentation (22') has a non-circular internal cross-section and the disk (30') has a non-circular contour.

7. The arrangement according to claim 5 or 6, wherein the disk (30; 30') rests with its outer peripheral edge on an inwardly projecting edge (32) of the indentation (22; 22').

8. The arrangement according to any of the preceding claims, wherein the screw (14) rests with its head on a part of the second component (12) outside of the indentation (22), when the connection has been established.

9. The arrangement according to the preamble of claim 1 or any of the preceding claims, **characterized in that** the threaded structure is formed in a disk (30") which is snap-fastened in a recess (38) of the second component (12).

## Revendications

1. Agencement ayant un premier composant (10) comportant un alésage fileté (18), un second composant (12 ; 12') ainsi qu'une vis (14) et un ressort hélicoïdal (20) entourant celle-ci pour relier les deux composants, dans lequel le ressort hélicoïdal (20) traverse le second composant (12 ; 12') et est en prise avec une structure filetée (24) de ce composant de sorte que leur partie située entre les deux composants forme une entretoise avec une dimension axiale réglable, **caractérisé en ce que** le second composant (12) comporte une indentation en forme de cuvette (22) qui reçoit une partie du ressort hélicoïdal (20) et dont le corps forme la structure filetée (24).

2. Agencement selon la revendication 1, dans lequel la structure filetée (24) est formée en un seul bloc avec l'indentation (22).

3. Agencement selon la revendication 1 ou 2, dans lequel la vis (14) a une tête dont le plus grand diamètre extérieur est inférieur au plus petit diamètre intérieur de l'indentation (22).

4. Agencement selon l'une des revendications précédentes, dans lequel le ressort hélicoïdal (20) est supporté par les surfaces intérieures de l'indentation (22).

5. Agencement selon l'une des revendications précédentes, dans lequel la structure filetée (24) est formée sur un disque (30 ; 30') qui est fabriqué séparément du deuxième composant (12).

6. Agencement selon la revendication 5, dans lequel l'indentation (22') a une section interne non circulaire et le disque (30') a un contour non circulaire.

7. Agencement selon la revendication 5 ou 6, dans lequel le disque (30 ; 30') repose avec son bord circonférentiel extérieur sur un bord (32) de l'indentation (22 ; 22') faisant saillie vers l'intérieur.

8. Agencement selon l'une des revendications précédentes, dans lequel la vis (14) repose avec sa tête sur une zone du second composant (12) située à l'extérieur de l'indentation (22) lorsque la liaison a été établie.

9. Agencement selon le préambule de la revendication 1 ou selon l'une des revendications précédentes, **caractérisé en ce que** la structure filetée (24) est formée sur un disque (30") qui est clipsé dans une ouverture (38) du second composant (12').
